# EUROPÄISCHE PATENTSCHRIFT

(11) **EP 1 369 449 B1**
(45) Veröffentlichungstag und Bekanntmachung des Hinweises auf die Patenterteilung: **11.02.2004**
(21) Anmeldenummer: 03011129.8
(22) Anmeldetag: 22.05.2003
(51) Int. Cl.: C08G 77/08, C08G 77/10, C07F 7/08

(54) **Verfahren zur Herstellung von Polydiorganosiloxanen**
Process for the preparation of polydiorganosiloxanes
Procédé de préparation des polydiorganosiloxanes

(30) Priorität: 06.06.2002 DE 10225231
(43) Veröffentlichungstag der Anmeldung: 10.12.2003
(73) Patentinhaber: Wacker-Chemie GmbH, 81737 München (DE)
(72) Erfinder: Stepp, Michael, Dr., 84489 Burghausen (DE); Keller, Wolfgang, 84561 Mehring (DE)
(74) Vertreter: Deffner-Lehner, Maria, Dr.

(56) Entgegenhaltungen:
- EP-A- 0 362 710
- EP-A- 0 860 459
- DE-A- 1 770 140
- DE-C- 4 234 959
- US-A- 3 146 251
- US-A- 3 799 962
- US-A- 4 113 690

## Beschreibung

Die Erfindung betrifft ein Verfahren zur Herstellung von Polydiorganosiloxanen, die jeweils an einem Molekülkettenende eine Si-gebundene Hydroxylgruppe und jeweils am anderen Molekülkettenende eine Si-gebundene gegebenenfalls substituierte Alkoxygruppe aufweisen.

In DE-C 42 34 959 (Th. Goldschmidt AG) ist die Ringöffnungspolymerisation von Hexamethylcyclotrisiloxan mit Lithiumalkoholat und Abbrechen der Reaktion mit einem Chlor-, Brom- oder Acyloxysilan beschrieben. Sicherheitstechnisch problematisch sind die Herstellung des Lithiumalkoholats aus dem jeweiligen Alkohol mit metallischem Lithium, sowie die Verwendung peroxidgefährdeter Ether als Lösungsmittel für das Alkoholat, d.h. es können sich schwer flüchtige Peroxide bilden. Weiterhin ist die Handhabung von Lithiumalkoholat wegen seiner Hydrolyseempfindlichkeit aufwändig.

Aus US-A 3,445,426 (Dow Corning Corporation) ist die Polymerisation von Hexaorganocyclotrisiloxan in Gegenwart von katalytischen Mengen eines fünffach koordinierten Siliciumkatalysators, eines Alkali-, Ammonium- oder Phosphoniumsiliconats bekannt. Die Katalysatoren haben aber den Nachteil, dass sie aufwändig herzustellen sind und sehr feuchtigkeitsempfindlich sind. Als Starter für die Ringöffungspolymerisation wird Alkohol in Kombination mit Wasser beschrieben, was stets zu Polymergemischen, d.h. OHendständigen Polymeren und monoalkoxy-endständigen Polymeren; führt.

Es bestand die Aufgabe ein Verfahren zur Herstellung von Polydiorganosiloxanen bereitzustellen, bei dem die oben genannten Nachteile vermieden werden und bei dem unempfindliche, leicht zugängliche Katalysatoren und möglichst geringe Mengen sicherheitstechnisch wenig problematische Lösungsmittel eingesetzt werden. Die Aufgabe wird durch die Erfindung gelöst.

Gegenstand der Erfindung ist ein Verfahren zur Herstellung von Polydiorganosiloxanen der allgemeinen Formel

R¹-(OSiR₂)ₙOH (I)

durch Umsetzung von Hexaorganocyclotrisiloxanen der Formel

(R₂SiO)₃ (II)

mit Alkoholen der Formel

R¹-OH (III)

wobei R gleich oder verschieden ist und einen einwertigen, gegebenenfalls substituierten Kohlenwasserstoffrest,
R¹ einen einwertigen, gegebenenfalls substituierten Kohlenwasserstoffrest und
n eine ganze Zahl von mindestens 3 bedeutet,
in Gegenwart eines Carbonatsalzes als Katalysator.

Vorzugsweise bedeutet R einen einwertigen, gegebenenfalls substituierten Kohlenwasserstoffrest mit 1 bis 18 Kohlenstoffatom(en) je Rest.

Vorzugsweise bedeutet R¹ einen einwertigen, gegebenenfalls substituierten Kohlenwasserstoffrest mit 1 bis 18 Kohlenstoffatom(en).

Vorzugsweise ist n eine ganze Zahl von 3 bis 999, bevorzugt von 6 bis 200, besonders bevorzugt von 9 bis 100.

Beispiele für Kohlenwasserstoffreste R sind Alkylreste, wie Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste wie der n-Octylrest und iso-Octylreste, wie der 2,2,4-Trimethylpentylrest, Nonylreste, wie der n-Nonylrest, Decylreste wie der n-Decylrest, Dodecylreste, wie der n-Dodecylrest; Alkenylreste, wie der Vinyl-,der Allyl-, der 5-Hexenyl- und der 10-Undecenylrest; Cycloalkylreste, wie Cyclopentyl-, Cyclohexyl-, Cycloheptyl- und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Reste R können einwertige substituierte Kohlenwasserstoffreste mit 1 bis 18 Kohlenstoffatomen je Rest sein. Substituierte Kohlenwasserstoffreste R sind vorzugsweise halogenierte Kohlenwasserstoffreste und Kohlenwasserstoffreste, die ein oder mehrere separate Sauerstoffatome enthalten. Die Sauerstoffatome sind bevorzugt über Alkylenbrücken verknüpft.

Beispiele für substituierte Kohlenwasserstoffreste R sind Halogenalkylreste, wie der 3-Chlorpropylrest, der 3,3,3-Trifluor-n-propylrest, der 2,2,2,2',2',2'-Hexafluorisopropylrest, der Heptafluorisopropylrest; Halogenarylreste, wie der o-, m-, p-Chlorphenylrest; und Acyloxyalkylreste, wie der Acetoxyethylrest und (Meth)acryloxypropylrest.

Beispiele für Kohlenwasserstoffreste R¹ sind Alkylreste, wie Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste wie der n-Octylrest und iso-Octylreste, wie der 2,2,4-Trimethylpentylrest, Nonylreste, wie der n-Nonylrest, Decylreste wie der n-Decylrest, Dodecylreste, wie der n-Dodecylrest; Alkenylreste, wie der Allyl-, der 5-Hexenyl- und der 10-Undecenylrest; Cycloalkylreste, wie Cyclopentyl-, Cyclohexyl-, Cycloheptyl- und Methylcyclohexylreste; und Aralkylreste, wie der Benzylrest, der α- und der β-Phenylethylrest.

Reste R¹ können einwertige substituierte Kohlenwasserstoffreste mit 1 bis 18 Kohlenstoffatomen je Rest sein. Substituierte Kohlenwasserstoffreste R¹ sind vorzugsweise einwertige Kohlenwasserstoffreste, die ein oder mehrere separate Heteroatome ausgewählt aus der Gruppe von Sauerstoff, Schwefel, Stickstoff, Phosphor und Silicium enthalten und bevorzugt den Verbindungsklassen Carbonsäure-, Phosphorsäure-, Thiol-, Amino-, Nitril-, Siloxy- und (Poly)etherderivaten zuzuordnen sind.

Beispiele für substituierte Kohlenwasserstoffreste R¹ sind Halogenalkylreste, wie der 3,3,3-Trifluor-n-propylrest, der 2,2,2,2',2',2'-Hexafluorisopropylrest, der Heptafluorisopropylrest; Silylalkylreste, wie der Trimethylsilylmethylrest; Acyloxyalkylreste, wie der 2-Acryloxyethylrest, der 3-Methacryloxypropylrest oder der 2-(2-Acryloxyethoxy)-ethylrest sowie Oligomere, die sich durch eine unterschiedliche Anzahl Ethylenoxyreste auszeichnen; Alkoxyalkylreste, wie der 2-Methoxyethylrest, der 2-(2-Methoxyethoxy)-ethylrest sowie Oligomere, die sich durch eine unterschiedliche Anzahl Ethylenoxyreste auszeichnen; Vinyloxyalkylreste, wie der 4-Vinyloxy-1-butylrest (H₂C=CH-O-(CH₂)₄-), der 4-(Vinyloxymethyl)-cyclohexyl-1-methylrest (H₂C=CH-O-CH₂-*(1,4)*-C₆H₁₀-CH₂-), der 2-(2-Vinyloxy-ethoxy)-1-ethylrest (H₂C=CH-O-CH₂CH₂-O-CH₂CH₂-); durch Mercaptogruppen -SH substituierte Kohlenwasserstoffreste, wie der 2-Mercapto-1-ethylrest (HS-CH₂CH₂-), der 1-Mercapto-2-propylrest (HS-CH₂(H₃C)CH-); durch Cyanogruppen -CN substituierte Kohlenwasserstoffreste, wie der 2-Cyano-1-ethylrest (NC-(CH₂)₃-); durch -C(=O)-Gruppen substituierte Kohlenwasserstoffreste, wie der 2-Oxo-1-propylrest (H₃C-C(=O)CH₂-); durch Aminogruppen der Formel -NR²₂ (wobei R² ein Wasserstoffatom oder ein C₁-C₁₀-Kohlenwasserstoffrest ist) substituierte Kohlenwasserstoffreste, wie der 2-N,N-Dimethylamino-1-ethylrest ((H₃C)₂N-(CH₂)₂-), der 3-N,N-Dimethylamino-1-propylrest ((H₃C)₂N-(CH₂)₃-) und der 3-N,N-Dimethylamino-2-propylrest ((H₃C)₂NCH₂(CH₃)CH-) ;
sowie Reste mit Photoinitiatorfunktion wie -CH₂CH₂-O-p-C₆H₄-C(=O)-C(CH₃)₂-OH ("Irgacure 2959"); oder Reste mit Heterocyclen wie der 3,4-Dihydro-2H-pyranyl-2-methyl-1-rest, der (2-Furyl)-1-methylrest, der 2-Morpholino-1-ethylrest, der 2-Piperidino-1-ethylrest, der 2-Pyrrolidino-1-ethylrest; oder chirale organische Reste wie der (1R,2S)-(-)-2-Dimethylamino-1-phenyl-1-propylrest (aus (-)-N-Methylephedrin), der ((R)-(+)-2-Furyl)-2-ethylrest; chirale oder racemische Hydroxycarbonsäureesterderivate, z.B. Milchsäurederivate, wie:
L-(-) H₃C-(CH₂)₃-OOC-(H₃C)HC-
L- (-) H₃C-CH₂-OOC-(H₃C)HC-
D-(+) (H₃C)₃C-OOC-(H₃C)HC-

Polyetherreste, wie solche der allgemeinen Formel:
H²C=CR²-CₘH₂ₘ-[(OC₂H₄)ₓ(OC₃H₆)_{y}(OC₄H₈)_{z}]- (statistisch- oder blockverteilt),
wobei R² ein Wasserstoffatom oder ein Alkylrest ist, m, x, y und z 0 oder eine ganze Zahl (mit x+y+z>0) ist, mit der Maßgabe, dass der entsprechende Alkohol der Formel (III), der bei dem erfindungsgemäßen Verfahren eingesetzt wird, bei 40°C noch flüssig ist, bevorzugt x, y und z 0 oder eine ganze Zahl von 1 bis 20, bevorzugt R ein Wasserstoffatom oder ein Methylrest und bevorzugt m 0 oder eine ganze Zahl von 1 bis 9 ist;
H²C=CR²-CO-[(OC₂H₄)ₓ(OC₃H₆)_{y}]- (statistisch- oder blockverteilt), wobei R² ein Wasserstoffatom oder ein Alkylrest ist, x und y jeweils 0 oder eine ganze Zahl (mit x+y>0) ist, mit der Maßgabe, dass der entsprechende Alkohol der Formel (III), der bei dem erfindungsgemäßen Verfahren eingesetzt wird, bei 40°C noch flüssig ist, bevorzugt x und y jeweils 0 oder eine ganze Zahl von 1 bis 20 ist;
R³-[(OC₂H₄)ₓ(OC₃H₆)_{y}(OC₄H₈)_{z}]- (statistisch- oder blockverteilt) , wobei R³ ein Alkyl- oder Acylrest, bevorzugt ein C₁-C₄-Alkylrest oder Acetylrest ist, x, y und z 0 oder eine ganze Zahl (mit x+y+z>0) ist, mit der Maßgabe, dass der entsprechende Alkohol der Formel (III), der bei dem erfindungsgemäßen Verfahren eingesetzt wird, bei 40°C noch flüssig ist, bevorzugt x, y und z 0 oder eine ganze Zahl von 1 bis 20 ist.

Bevorzugt bedeutet R ein Alkylrest, besonders bevorzugt ein Methylrest.

Bevorzugt bedeutet R¹ ein Alkylrest, Alkenylrest oder substituierter Kohlenwasserstoffrest, besonders bevorzugt ein Ethyl-, n-Propyl, iso-Propyl-, n-Butyl- oder iso-Butylrest.

Beispiele für die erfindungsgemäßen Organo(poly)siloxane sind solche der Formel:

(H₃C)₂CH-CH₂-(OSiMe₂)ₙ-OH

H₃C-(CH₂)₂-(OSiMe₂)ₙ-OH

(H₃C)₂CH-(OSiMe₂)ₙ-OH

H₃C-CH₂-(OSiMe₂)ₙ-OH

H₃C-(OSiMe₂)ₙ-OH

H₂C=CH-CH₂-(OSiMe₂)ₙ-OH

H₂C=CH-(CH₂)₉-(OSiMe₂)ₙ-OH

H₂C=CH-C(O)O-CH₂-CH₂-(OSiMe₂)ₙ-OH

H₂C=CH-C(O)-(OC₂H₄)₂-(OSiMe₂)ₙ-OH

(H₃C)₃Si-CH₂-(OSiMe₂)ₙ-OH

L-(-)H₃C-CH₂-OOC-(H₃C)HC-(OSiMe₂)ₙ-OH

H₂C=CH-O-(CH₂)₄-(OSiMe₂)ₙ-OH

H₃C-C(=O)CH₂-(OSiMe₂)ₙ-OH

(H₃C)₂N-(CH₂)₂-(OSiMe₂)ₙ-OH

CH₂=CHCH₂-[(OC₂H₄)₂₀(OC₃H₆)₂₀]-[OSi(CH₃)₂]ₙ-OH

HS-CH₂CH₂-(OSiMe₂) ₙ-OH

wobei Me ein Methylrest ist und n die oben dafür angegebene Bedeutung hat.

Die erfindungsgemäßen Organo(poly)siloxane besitzen eine Viskosität von vorzugsweise 4 mPa·s bis 9·10⁵ mPa·s bei 25°C.

Beispiele für die beim erfindungsgemäßen Verfahren eingesetzten Hexaorganocylotrisiloxane (II) sind
Hexamethylcyclotrisiloxan,
Hexaethylcyclotrisiloxan,
1,3,5-Trimethyl-1,3,5-triethylcyclo-2,4,6-trisiloxan und
1,3,5-Trimethyl-1,3,5-tris(3,3,3-trifluorpropyl)cyclo-2,4,6-trisiloxan.

Bei dem erfindungsgemäßen Verfahren wird als Hexaorganocyclotrisiloxan (II) bevorzugt Hexamethylcyclotrisiloxan (im folgenden bezeichnet als "D3") eingesetzt.

Vorzugsweise wird bei dem erfindungsgemäßen Verfahren als Katalysator an ein Trägermaterial gebundenes Carbonatsalz eingesetzt.

Bevorzugt wird bei dem erfindungsgemäßen Verfahren als Katalysator Alkalimetallcarbonat, oder an ein Trägermaterial gebundenes Alkalimetallcarbonat eingesetzt.

Bei dem im erfindungsgemäßen Verfahren eingesetzten Katalysator kann es sich um eine einzelne Art wie auch um ein Gemisch aus mindestens zwei verschiedenen Arten derartiger Katalysatoren handeln.

Beispiele für Alkalimetallcarbonate sind Kaliumcarbonat und Cäsiumcarbonat, wobei Kaliumcarbonat bevorzugt ist.

Beispiele für Trägermaterial sind Aluminiumoxide, Titandioxide, Zirkoniumoxide, Zeolithe, Kieselgele, Diatomeenerden und Ionenaustauscherharze, wobei Aluminiumoxide bevorzugt sind.

Besonders bevorzugt wird bei dem erfindungsgemäßen Verfahren Kaliumcarbonat, insbesondere an Aluminiumoxid gebundenes Kaliumcarbonat, eingesetzt.

An Trägermaterial gebundenes Kaliumcarbonat wird beispielsweise durch Eindampfen einer Mischung aus Aluminiumoxid und Kaliumcarbonat in Wasser, durch Trocknung einer trocken miteinander verriebenen Mischung aus Aluminiumoxid und Kaliumcarbonat, oder durch Hydrolyse von Aluminiumtriisopropylat, Zirkoniumtetraisopropylat oder Titantetraisopropylat in Gegenwart von Kaliumcarbonat hergestellt.

Das erfindungsgemäße Verfahren hat den Vorteil, dass der eingesetzte Katalysator leicht zugänglich und einfach an Luft zu handhaben ist. Die Herstellung der erfindungsgemäßen Organo(poly)siloxane mit dem erfindungsgemäßen Katalysator, d.h. unter heterogener Katalyse, hat den weiteren Vorteil, dass der eingesetzte Katalysator, ein Feststoff, leicht aus der Reaktionsmischung abgetrennt werden kann, beispielsweise durch einfaches Filtrieren.

Bei dem erfindungsgemäßen Verfahren wird der Katalysator in Mengen von vorzugsweise 0,01 - 1 Gew.-%, bevorzugt 0,1 bis 0,5 Gew.-%, jeweils bezogen auf das Gesamtgewicht des eingesetzten Hexaorganocyclotrisiloxans, eingesetzt.

Die Alkoxygruppe am Molekülkettenende des bei dem erfindungsgemäßen Verfahren hergestellten Organo(poly)siloxans wird über den eingesetzten Alkohol (III) eingeführt. Vorzugsweise wird Ethanol, n-Propanol, iso-Propanol, n-Butanol oder iso-Butanol eingesetzt.

Das bei dem erfindungsgemäßen Verfahren eingesetzte Verhältnis von Hexaorganocyclotrisiloxan (II) zu Alkohol (III) bestimmt die mittlere Kettenlänge des Produkts. Aufgrund kinetischer Effekte kann es zur Erzielung einer bestimmten mittleren Kettenlänge notwendig sein, beim eingesetzten Verhältnis von Hexaorganocyclotrisiloxan zu Alkohol von der theoretischen Stöchiometrie abzuweichen und einen Überschuss von Hexaorganocyclotrisiloxan oder Alkohol einzusetzen. Das optimale Verhältnis kann durch Vorversuche ermittelt werden. Hexaorganocyclotrisiloxan (II) wird vorzugsweise in Mengen von 0,1 bis 333 Mol, bevorzugt in Mengen von 0,1 bis 10 Mol, jeweils bezogen auf 1 Mol Alkohol (III) eingesetzt.

Zur Erhöhung der Selektivität der Reaktion kann das erfindungsgemäße Verfahren in Gegenwart von polarem, aprotischem organischem Lösungsmittel, gegebenenfalls im Gemisch mit einem unpolaren Lösungsmittel durchgeführt werden. Beispiele für polare, aprotische organische Lösungsmittel sind Aceton, Methyl-isobutylketon (MIBK), Methylethylketon (MEK), Dimethylformamid, Dimethylsulfoxid, Acetonitril, Tetrahydrofuran, Diethylether, Dibutylether, Methyl-t-butylether, Diethylenglykoldimethylether, Polyethylenglykoldimethylether, Essigsäure-n-butylester und Essigsäureethylester. Beispiele für unpolare Lösungsmittel sind Toluol, Xylol, Cyclohexan, Methylcyclohexan, Heptan und Siloxane wie Octamethylcyclotetrasiloxan, Decamethylcyclopentasiloxan, Hexamethyldisiloxan oder Octamethyltrisiloxan.

Polares, aprotisches organisches Lösungsmittel wird je nach Art des eingesetzten Carbonat-Ionen aufweisenden Katalysators vorzugsweise in Mengen von 0 - 50 Gew.-%, bevorzugt 5 bis 30 Gew.-%, besonders bevorzugt 5 bis 20 Gew.-%, jeweils bezogen auf das Gesamtgewicht aus Alkohol und Hexaorganocyclotrisiloxan, eingesetzt.

Unpolares organisches Lösungsmittel kann zur besseren Homogenisierung der Reaktionsmischung in Mengen von 0 bis 80 Gew.-%, vorzugsweise 50 bis 70 Gew.-%, jeweils bezogen auf das Gesamtgewicht aus Alkohol und Hexaorganocyclotrisiloxan, eingesetzt werden.

Zur Erhöhung der Selektivität und/oder Geschwindigkeit der Reaktion können bei dem erfindungsgemäßen Verfahren Gemische verschiedener Lösungsmittel eingesetzt werden.

Das Lösungsmittel wird in der Regel nach beendeter Reaktion durch Abdestillieren entfernt. Falls das erfindungsgemäße Polysiloxan in Lösung weiterverarbeitet werden soll, kann die Entfernung des Lösungsmittels jedoch entfallen. Je nach Verwendungszweck können in diesem Fall auch hochsiedende, destillativ nicht mehr abtrennbare Flüssigkeiten wie Polydimethylsiloxane als Lösungsmittel eingesetzt werden.

Zur Erhöhung der Selektivität und/oder Geschwindigkeit der Reaktion können bei dem erfindungsgemäßen Verfahren Phasentransferkatalysatoren aus der Gruppe der quaternären Ammoniumsalze, wie Benzyltriethylammoniumchlorid, Kronenether, wie 18-Krone-6, 1,4,7,10,13-Hexaoxacyclooctadecan oder Polyethylenglykoldimethylether, oder tertiäre Amine, wie 4-Dimethylaminopyridin, N,N-Dimethylcyclohexylamin oder 1,4-Diazabicyclo[2,2,2]octan mitverwendet werden.

Zum Ausschluss von Feuchtigkeitsspuren kann es zweckmäßig sein Trocknungsmittel, wie Zeolithe, wasserfreies Natriumsulfat oder wasserfreies Magnesiumsulfat bei dem erfindungsgemäßen Verfahren mitzuverwenden.

Das erfindungsgemäße Verfahren wird vorzugsweise bei einer Temperatur, die oberhalb der Schmelztemperatur der eingesetzten Reaktionspartner liegt, bevorzugt bei einer Temperatur von 60°C bis 80°C durchgeführt, kann bei Verwendung von Lösungsmitteln auch bei tieferer Temperatur durchgeführt werden.

Das erfindungsgemäße Verfahren wird vorzugsweise beim Druck der umgebenden Atmosphäre, also etwa bei 1020 hPa (abs.), durchgeführt, es können aber auch höhere oder niedrigere Drücke angewendet werden.

Die Reaktionszeit beträgt bei dem erfindungsgemäßen Verfahren je nach Reaktionstemperatur, Art und Menge der eingesetzten Reaktionspartner und Lösungsmittel vorzugsweise 0,25 bis 48 Stunden. Ein Abbruch der Reaktion bei unvollständigem Umsatz ist durch Abkühlen auf Raumtemperatur und/oder Filtrieren möglich. Weiterhin ist ein Abbruch der Reaktion durch Zugabe einer Säure, wie Essigsäure, Ameisensäure, 2-Ethylhexansäure oder Phosphorsäure möglich.

### Herstellung des Katalysators:

10,1 g (0,1 mol) Aluminiumoxid (bezogen bei Fa. Merck) werden mit 6.9 g (0,1 mol) wasserfreiem Kaliumcarbonat (bezogen bei Fa. Merck) vermischt, gemahlen, und 24 Stunden bei 200°C getempert. Das Pulver wird in einer verschlossenen Glasflasche gelagert.

### Beispiel 1:

Eine Mischung von 222 g (1 mol) Hexamethylcyclotrisiloxan, 96,2 g (1,6 mol) 2-Propanol p.a. (bezogen bei Fa. Merck), und 20 g Molekularsieb 0,4 nm (bezogen bei Fa. Merck) wird auf 60°C aufgeheizt und mit einer Suspension von 1 g Katalysator (dessen Herstellung oben beschrieben ist) in 46,4 g ( 0,8 mol) Aceton p.a. (bezogen bei Fa. Merck) versetzt. Es wird vier Stunden bei 60°C gerührt, über Kieselgel 60 (bezogen bei Fa. Merck) filtriert, und das Filtrat am Rotationsverdampfer bei 40°C und 5 mbar eingeengt. Es werden 241,6 g eines klaren, farblosen Öls erhalten, welches nach den Ergebnissen des ²⁹Si-NMR-Spektrums und des MALDI-TOF-Massenspektrums einem Silicon der folgenden Formel entspricht:

(CH₃)₂CH-[OSi(CH₃)₂]₄₄-OH

### Beispiel 2:

Eine Mischung von 222 g (1 mol) Hexamethylcyclotrisiloxan, 36,8 g (0,8 mol) Ethanol (bezogen bei Fa. Merck), und 20 g Molekularsieb 0.4 nm (bezogen bei Fa. Merck) wird auf 50°C aufgeheizt und mit einer Suspension von 1 g Katalysator (dessen Herstellung oben beschrieben ist) und 0,3 g (0,0013 mol) Benzyltriethylammoniumchlorid (bezogen bei Fa. Merck) in 56,4 g (0,6 mol) Dimethylsulfoxid (bezogen bei Fa. Merck) versetzt. Es wird vier Stunden bei 50°C gerührt, über Kieselgel 60 (bezogen bei Fa. Merck) filtriert, und das Filtrat am Rotationsverdampfer bei 50°C und 5 mbar eingeengt, und das abgeschiedene Dimethylsulfoxid am Scheidetrichter abgetrennt. Es werden 234 g eines klaren, farblosen Öls erhalten, welches nach den Ergebnissen des ²⁹Si-NMR-Spektrums und des MALDI-TOF-Massenspektrums einem Silicon der folgenden Formel entspricht:

C₂H₅-[OSi(CH₃)₂]₁₅-OH

### Beispiel 3:

Eine Mischung von 111 g (0,5 mol) Hexamethylcyclotrisiloxan und 26 g (0,2 mol) 2-Hydroxyethylmethacrylat (bezogen bei Fa. Merck) wird auf 50°C aufgeheizt und mit einer Suspension von 0,5 g Katalysator (dessen Herstellung oben beschrieben ist) in 23,2 g (0,4 mol) Aceton p.a. (bezogen bei Fa. Merck) versetzt. Es wird 120 Minuten bei 50°C gerührt, über Kieselgel 60 (bezogen bei Fa. Merck) filtriert, und das Filtrat am Rotationsverdampfer bei 100°C und 5 mbar eingeengt. Es werden 121 g eines klaren, farblosen Öls erhalten, welches nach dem ²⁹Si-NMR-Spektrum einem Silicon der folgenden Formel entspricht:

CH₂=C(CH₃)-C(O)O-C₂H₄-[OSi(CH₃)₂]₁₂-OH

### Beispiel 4:

Eine Mischung von 111 g (0,5 mol) Hexamethylcyclotrisiloxan, 23,2 g (0,4 mol) Allylalkohol (bezogen bei Fa. Merck), und 88,8 g (0,3 mol) Octamethylcyclotetrasiloxan wird auf 80°C aufgeheizt und mit einer Suspension von 0,5 g Katalysator (dessen Herstellung oben beschrieben ist) in 23,2 g (0,4 mol) Aceton p.a. (bezogen bei Fa. Merck) versetzt. Es wird 5 Stunden bei 80°C gerührt, über Kieselgel 60 (bezogen bei Fa. Merck) filtriert, und das Filtrat am Rotationsverdampfer bei 60°C und 5 mbar eingeengt. Es werden 118 g eines Öls erhalten, welches nach den Ergebnissen des ²⁹Si-NMR-Spektrums und des MALDI-TOF-Massenspektrums einem Silicon der folgenden Formel entspricht:

CH₂=CHCH₂- [OSi(CH₃)₂]₁₄-OH

### Beispiel 5:

Eine Mischung von 111 g (0,5 mol) Hexamethylcyclotrisiloxan und 29,6 g (0,4 mol) 2-Methyl-1-propanol (bezogen bei Fa. Merck) wird auf 60°C aufgeheizt und mit einer Suspension von 0,5 g wasserfreiem Kaliumcarbonat (bezogen bei Fa. Merck) in 23,2 g (0,4 mol) Aceton p.a. (bezogen bei Fa. Merck) versetzt. Es wird 120 Minuten bei 60°C gerührt, über Kieselgel 60 (bezogen bei Fa. Merck) filtriert, und das Filtrat am Rotationsverdampfer bei 40°C und 5 mbar eingeengt. Es werden 124 g eines klaren, farblosen Öls erhalten, welches nach den Ergebnissen des ²⁹Si-NMR-Spektrums und des MALDI-TOF-Massenspektrums einem Siliconöl der folgenden Formel entspricht:

(CH₃)₂CHCH₂- [OSi (CH₃)₂]₂₂-OH

## Patentansprüche

1. Verfahren zur Herstellung von Polydiorganosiloxanen der allgemeinen Formel
R¹-(OSiR₂)ₙOH (I)
durch Umsetzung von Hexaorganocyclotrisiloxanen der Formel
(R₂SiO)₃ (II)
mit Alkoholen der Formel
R¹-OH (III)
wobei R gleich oder verschieden ist und einen einwertigen, gegebenenfalls substituierten Kohlenwasserstoffrest,
R¹ einen einwertigen, gegebenenfalls substituierten Kohlenwasserstoffrest und
n eine ganze Zahl von mindestens 3 bedeutet,
in Gegenwart eines Carbonatsalzes als Katalysator.

2. Verfahren nach Anspruch 1, **dadurch gekennzeichnet, dass**, die Umsetzung in Gegenwart eines polaren, aprotischen organischen Lösungsmittels erfolgt.

3. Verfahren nach Anspruch 1 oder 2, **dadurch gekennzeichnet, dass** als Katalysator ein an ein Trägermaterial gebundenes Carbonatsalz verwendet wird.

4. Verfahren nach Anspruch 1 oder 2, **dadurch gekennzeichnet, dass** als Katalysator Alkalimetallcarbonat verwendet wird.

5. Verfahren nach Anspruch 1 oder 2, **dadurch gekennzeichnet, dass** als Katalysator ein an ein Trägermaterial gebundenes Alkalimetallcarbonat verwendet wird.

6. Verfahren nach Anspruch 1 oder 2, **dadurch gekennzeichnet, dass** als Katalysator Kaliumcarbonat verwendet wird.

7. Verfahren nach Anspruch 1 oder 2, **dadurch gekennzeichnet, dass** als Katalysator ein an ein Trägermaterial gebundenes Kaliumcarbonat verwendet wird.

8. Verfahren nach Anspruch 1 oder 2, **dadurch gekennzeichnet, dass** als Katalysator ein an Aluminiumoxid gebundenes Kaliumcarbonat verwendet wird.

9. Verfahren nach einem der Ansprüche 1 bis 8, **dadurch gekennzeichnet, dass** ein unpolares organisches Lösungsmittel mitverwendet wird.

10. Verfahren nach einem der Ansprüche 1 bis 9, **dadurch gekennzeichnet, dass** Hexaorganocyclotrisiloxan (II) in Mengen von 0,1 bis 333 Mol je Mol Alkohol (III) eingesetzt wird.

11. Verfahren nach einem der Ansprüche 1 bis 10, **dadurch gekennzeichnet, dass** der Katalysator in Mengen von 0,01 bis 1 Gew.-%, bezogen auf das Gesamtgewicht an eingesetztem Hexaorganocyclotrisiloxan (II), eingesetzt wird.

12. Verfahren nach einem der Ansprüche 1 bis 11, **dadurch gekennzeichnet, dass** als Hexaorganocyclotrisiloxan (II) Hexamethylcyclotrisiloxan verwendet wird.

13. Verfahren nach einem der Ansprüche 1 bis 12, **dadurch gekennzeichnet, dass** als Alkohol (III) Ethanol, n-Propanol, iso-Propanol, n-Butanol oder iso-Butanol verwendet wird.

## Claims

1. Process for preparing polydiorganosiloxanes of the general formula
R¹-(OSiR₂)ₙOH (I)
by reacting hexaorganocyclotrisiloxanes of the formula
(R₂SiO)₃ (II)
with alcohols of the formula
R¹-OH (III)
where each R is the same or different and is a monovalent, optionally substituted hydrocarbon radical,
R¹ is a monovalent, optionally substituted hydrocarbon radical and
n is an integer of at least 3,
in the presence of a carbonate salt as a catalyst.

2. The process as claimed in Claim 1, wherein the reaction is effected in the presence of a polar, aprotic, organic solvent.

3. The process as claimed in Claim 1 or 2, wherein the catalyst used is a carbonate salt bonded to a support material.

4. The process as claimed in Claim 1 or 2, wherein the catalyst used is an alkali metal carbonate.

5. The process as claimed in Claim 1 or 2, wherein the catalyst used is an alkali metal carbonate bonded to a support material.

6. The process as claimed in Claim 1 or 2, wherein the catalyst used is potassium carbonate.

7. The process as claimed in Claim 1 or 2, wherein the catalyst used is a potassium carbonate bonded to a support material.

8. The process as claimed in Claim 1 or 2, wherein the catalyst used is a potassium carbonate bonded to aluminium oxide.

9. The process as claimed in any of Claims 1 to 8, wherein a nonpolar organic solvent is also used.

10. The process as claimed in any of Claims 1 to 9, wherein hexaorganocyclotrisiloxane (II) is used in amounts of from 0.1 to 333 mol per mole of alcohol (III).

11. The process as claimed in any of Claims 1 to 10, wherein the catalyst is used in amounts of from 0.01 to 1% by weight, based on the total weight of hexaorganocyclotrisiloxane (II) used.

12. The process as claimed in any of Claims 1 to 11, wherein the hexaorganocyclotrisiloxane (II) used is hexamethylcyclotrisiloxane.

13. The process as claimed in any of Claims 1 to 12, wherein the alcohol (III) used is ethanol, n-propanol, isopropanol, n-butanol or isobutanol.

## Revendications

1. Procédé de fabrication de polydiorganosiloxanes de formule générale:
R¹-(OSiR₂)ₙOH (I)
par conversion d'hexaorganocyclotrisiloxanes de formule
(R₂SiO)₃ (II)
avec des alcools de formule
R¹-OH (III)
où R est identique ou différent et représente un radical hydrocarbure monovalent, éventuellement substitué,
R¹ représente un radical hydrocarbure monovalent, éventuellement substitué, et
n représente un nombre entier qui vaut au moins 3, en présence d'un sel de carbonate comme catalyseur.

2. Procédé selon la revendication 1, **caractérisé en ce que** la conversion s'effectue en présence d'un solvant organique polaire aprotique.

3. Procédé selon la revendication 1 ou 2, **caractérisé en ce que** l'on utilise comme catalyseur un sel de carbonate lié à un matériau de support.

4. Procédé selon la revendication 1 ou 2, **caractérisé en ce que** l'on utilise comme catalyseur un carbonate de métal alcalin.

5. Procédé selon la revendication 1 ou 2, **caractérisé en ce que** l'on utilise comme catalyseur un carbonate de métal alcalin lié à un matériau de support.

6. Procédé selon la revendication 1 ou 2, **caractérisé en ce que** l'on utilise comme catalyseur du carbonate de potassium.

7. Procédé selon la revendication 1 ou 2, **caractérisé en ce que** l'on utilise comme catalyseur un carbonate de potassium lié à un matériau de support.

8. Procédé selon la revendication 1 ou 2, **caractérisé en ce que** l'on utilise comme catalyseur un carbonate de potassium lié à un oxyde d'aluminium.

9. Procédé selon l'une quelconque des revendications 1 à 8, **caractérisé en ce que** l'on utilise conjointement un solvant organique non polaire.

10. Procédé selon l'une quelconque des revendications 1 à 9, **caractérisé en ce que** l'hexaorganocyclotrisiloxane (II) est utilisé en quantités de 0,1 à 333 moles par mole d'alcool (III).

11. Procédé selon l'une quelconque des revendications 1 à 10, **caractérisé en ce que** le catalyseur est utilisé en quantités de 0,01 à 1% en poids par rapport au poids total de l'hexaorganocyclotrisiloxane (II) utilisé.

12. Procédé selon l'une quelconque des revendications 1 à 11, **caractérisé en ce que** comme hexaorganocyclotrisiloxane (II), on utilise l'hexaméthylcyclotrisiloxane.

13. Procédé selon l'une quelconque des revendications 1 à 12, **caractérisé en ce que** comme alcool (III), on utilise l'éthanol, le n-propanol, l'isopropanol, le n-butanol ou l'isobutanol.
